# EUROPÄISCHE PATENTSCHRIFT

(11) **EP 0 909 673 B1**
(45) Veröffentlichungstag und Bekanntmachung des Hinweises auf die Patenterteilung: **26.11.2003**
(21) Anmeldenummer: 98118884.0
(22) Anmeldetag: 06.10.1998
(51) Int. Cl.: B60K 41/02, F16D 48/06

(54) **Verfahren zur Steuerung einer automatischen Kupplungsbetätigung eines Kraftfahrzeuges**
method for controlling an automatic clutch of a vehicle
methode de contrôle d'un embrayage automatisée de véhicule

(30) Priorität: 17.10.1997 DE 19745677
(43) Veröffentlichungstag der Anmeldung: 21.04.1999
(73) Patentinhaber: DaimlerChrysler AG, 70567 Stuttgart (DE)
(72) Erfinder: Grass, Thomas, 73660 Urbach (DE); Kosik, Franz, 73760 Ostfildern (DE)

(56) Entgegenhaltungen:
- DE-A- 4 237 983
- DE-A- 19 819 780

## Beschreibung

Die Erfindung betrifft ein Verfahren zur Steuerung einer automatischen Kupplungsbetätigung eines Kraftfahrzeuges gemäß dem Oberbegriff des Anspruches 1.

Verfahren der vorgenannten Art sind aus der Praxis bekannt. Bei diesen Verfahren erfolgt das Einkuppeln unter anderem in Abhängigkeit von der Motor- und der Kupplungsscheibendrehzahl. Die Drehzahl der Kupplungsscheibe kann dabei entweder direkt oder indirekt erfaßt werden, direkt beispielsweise über einen Sensor an der Getriebeeingangswelle, indirekt beispielsweise durch Berechnung in Kenntnis der Raddrehzahl und der jeweils eingelegten Gangstufe.

Sowohl bei der direkten wie auch bei der indirekten Erfassung der Kupplungsscheibendrehzahl kann es zu Fehlern in der Drehzahlerfassung kommen, oder die Drehzahlerfassung vollständig ausfallen, so daß ein entsprechendes Drehzahlsignal für die Kupplungsscheibe nicht mehr verfügbar ist. Die Kupplungsscheibendrehzahl ist praktisch aber, im Gegensatz zur Motordrehzahl, nicht beeinflußbar, und kann auch kaum abgeschätzt werden, da sie geschwindigkeitsabhängig ist und zudem abhängig vom jeweils eingelegten Gang. Demgegenüber ist die Motordrehzahl über die Gaspedalstellung beeinflußbar. Es kann somit auch bei Beginn des Einkuppelvorganges nicht erkannt oder abgeschätzt werden, ob die Kupplungsscheibendrehzahl nach Beendigung des Einkuppelvorganges über oder unter einer vorgegebenen Motordrehzahl liegt, so daß Motorgrenzdrehzahlen, so beispielsweise Höchstdrehzahl oder Leerlaufdrehzahl über bzw. unterschritten werden können, mit der Folge einer möglichen Zerstörung des Motores durch Überdrehen oder eines Abwürgen des Motores bei die Leerlaufdrehzahl wesentlich unterschreitenden Drehzahlen der Kupplungsscheibe.

Hierzu ist aus der Gattungsbildenden DE 42 37 983 A1 eine Anordnung zur automatischen Steuerung einer Kraftfahrzeugreibungskupplung bekannt, bei der bei Defekt einzelner Sensoren deren Signale durch Signale anderer Sensoren substituiert werden, oder aber auf eine Notbetriebsart umgeschaltet wird, die ohne den defekten Sensor gegebenenfalls unter Inkaufnahme von Komforteinbußen den weiteren Betrieb des Kraftfahrzeuges ermöglichen soll. Um die Kupplung bei Defekt eines einen Betriebsparameter der Brennkraftmaschine erfassenden Sensors im Notbetrieb zu steuern, wird dabei auf den Motordrehzahlsensor und den Fahrpedalsensor zurückgegriffen. Fällt der Motordrehzahlsensor aus, so wird für den Notbetrieb die Stellgeschwindigkeit des Stellantriebes der Kupplung von der Größe der vom Fahrpedalsensor erfaßten Auslenkung des Fahrpedals aus dessen Ruhestellung abhängig gemacht. Fällt der Fahrpedalsensor aus, so wird die Stellgeschwindigkeit der Kupplung in Abhängigkeit von der Motordrehzahl, die über den Motordrehzahlsensor erfaßt wird, gesteuert. In beiden Fällen wird damit das Ziel verfolgt, dem Fahrer die Möglichkeit zu geben, unabhängig von der Sensorik über das Fahrpedal das Einkuppelverhalten zu beeinflussen.

Im Hinblick auf automatisierte Kupplungen ist es aus der DE 43 26 862 A1 des weiteren bekannt, bei Fehlbedienungen des Getriebes durch den Fahrer zu verhindern, daß beim Synchronisieren des eingelegten Ganges vorbestimmte Drehzahlschwellen des Motores überschritten werden. Ausgangspunkt ist hierbei, daß bei versehentlichem Einlegen eines zu kleinen Ganges die Motordrehzahl von der Abtriebsseite her in Bereiche geschleppt werden kann, die oberhalb der Höchstdrehzahl des Motores liegen und in denen Schäden des Motores eintreten können. Ungeachtet einer diesbezüglichen, das Überdrehen des Motores verhindernden Lösung soll aber die Nutzung des Motorschleppmomentes zur Bremsleistungssteigerung erhalten bleiben. Zu diesem Zweck wird beim Synchronisieren eines eingelegten Ganges die Getriebedrehzahl überwacht und beim Überschreiten einer vorbestimmten Drehzahlschwelle die - im Rahmen des ablaufenden Schaltvorganges vorher geöffnete Kupplung - lediglich bis zu ihrem Greifpunkt eingerückt und solange in dieser, einen Kupplungsschlupf ermöglichenden Stellung gehalten, bis die Getriebezahl die vorbestimmte Drehzahlschwelle unterschreitet. Voraussetzung für eine solche Arbeitsweise ist eine funktionierende Drehzahlerfassung für das Getriebe und damit auch für die Kupplungsscheibe.

Desweiteren beschreibt die nicht vorveröffentlichte DE 196 17 567 A1 eine Notsteuerung einer automatisierten Kupplung in Abhängigkeit von der Leistungssteuerung des Fahrzeugmotores, wobei die Kupplung bei sich schließender Drosselklappe des Motores öffnet und bei sich öffnender Drosselklappe schließt und wobei eine Begrenzung der Motordrehzahl nach oben für den Schleppbetrieb dadurch vorgesehen wird, daß bei Überschreiten eines Schwellwertes der Motordrehzahl die Kupplung öffnet, offen bleibt oder mit Schlupf arbeitet. Die Absicherung in Gegenrichtung erfolgt dadurch, daß ein Leerlaufsignal der Motorsteuerung als Öffnungssignal für die Kupplung genützt wird. Damit sind Grenzwerte angesprochen, nämlich die Leerlaufdrehzahl sowie ein etwa der maximal zulässigen Motordrehzahl entsprechender Schwellwert, die ohne Abwürgen des Motores bzw. die Gefahr von Schäden durch Überdrehen nicht überschritten werden dürfen und die dementsprechend ein hartes Eingreifen erfordern, damit tatsächlich nur einen Notbetrieb ermöglichen.

Im Hinblick auf Fahrzeuge mit automatischer Kupplungsbetätigung soll durch die Erfindung trotz Ausfall des die Kupplungsfunktion unmittelbar betreffenden Kupplungsscheibendrehzahlsignales ein Verfahren vorgeschlagen werden, welches einen möglichst komfortablen Notbetrieb ermöglicht, also auch einen Notbetrieb, der keine Mitwirkung des Fahrers notwendig macht.

Gemäß der Erfindung wird dies mit einer Ausgestaltung nach dem Anspruch 1 erreicht. Hierbei wird die Motordrehzahl in der Einkuppelphase bei Ausfall des Kupplungsscheibendrehzahlsignales zur priorisierten Leitdrehzahl für den Einkuppelvorgang gemacht, allerdings mit der Einschränkung, daß von der Drehzahl des geschleppten oder gebremsten Motores abhängige, priorisierte Eingriffe in die Kupplungssteuerung nur dann vorgenommen werden, wenn motorkritische Drehzahlbereiche erreicht werden, der Einkuppelvorgang ansonsten aber "normal" abläuft, also in Abhängigkeit von den sonstigen Steuerkriterien. Werden motorkritische Grenzdrehzahlen erreicht, wird also der Motor gegen die obere Grenzdrehzahl hochgeschleppt, und besteht damit die Gefahr des Überdrehens, dann wird dem durch weiteres Öffnen der Kupplung begegnet, und gleiches gilt in Gegenrichtung, wenn die Gefahr des Abwürgens des Motores besteht.

Im Rahmen der Erfindung kann dies beispielsweise dadurch geschehen, daß motorseitig eine Richtdrehzahl in Form einer Motordrehzahllinie vorgegeben wird, und daß bei wachsender Differenz der Drehzahl des über die Kupplung ausgehend von der Abtriebsseite geschleppten oder gebremsten Motores zu dieser Richtdrehzahl eine Anpassung durch Öffnen der Kupplung erfolgt.

Ein weiterer Anpassungsspielraum und weniger Steuerungseingriffe sind nötig, wenn die "Richtdrehzahl" durch ein Motordrehzahlband bestimmt ist, das beispielsweise den mittleren Motordrehzahlbereich abdeckt, so daß lediglich außerhalb dieses Drehzahlbandes durch Öffnen der Kupplung darauf hingewirkt wird, daß dieses Drehzahlband durch Einflüsse von der Abtriebsseite her nicht soweit verlassen wird, daß motorkritische Werte erreicht werden.

Eine im Rahmen der Erfindung bevorzugte Lösung besteht darin, als "Richtdrehzahl" jeweils eine obere und eine untere Motordrehzahlgrenze vorzugeben, wobei diese beispielsweise durch der maximal zulässigen Motordrehzahl und der Leerlaufdrehzahl entsprechende Motordrehzahllinien gebildet sein kann und diesen Motordrehzahllinien als äußeren Grenzwerten jeweils eine innere Motordrehzahllinie zugeordnet wird, die die innere Grenze eines Drehzahlbandes bestimmt, innerhalb dessen durch Beeinflussung des Einrückvorganges der Kupplung eine Steuerung z.B. dahingehend vorgenommen wird, daß der Motor von der Abtriebsseite her nicht über die äußere Grenzdrehzahl hinaus hochgedreht werden kann, bzw. daß bei entsprechend hoher Kupplungsscheibendrehzahl die Kupplung wieder voll geschlossen wird, wenn die innere Grenzdrehzahl erreicht ist. Es kann so ein recht breiter, mittlerer Drehzahlbereich unbeeinflußt von dem erfindungsgemäßen Eingriff genutzt werden, was beispielsweise für den Motorbremsbetrieb von Bedeutung ist, und es können die durch die Erfindung bedingten Einschränkungen einerseits und motorschützenden Maßnahmen andererseits auf Drehzahlgrenzbereiche beschränkt werden, die bevorzugt nahe den oberen und unteren Drehzahlgrenzen des Motores liegen.

Weitere Einzelheiten und Merkmale der Erfindung ergeben sich aus den Ansprüchen. Darüber hinaus wird die Erfindung nachfolgend mit weiteren Einzelheiten anhand der Zeichnungsbeschreibung näher erläutert. Es zeigen:
- Figur 1: den prinzipiellen Aufbau eines Triebstranges eines Kraftfahrzeuges am Beispiel eines Kraftfahrzeuges mit Quermotoranordnung, wobei Motor und Getriebe und die zwischen diesen liegende Kupplung in Fahrzeugquerrichtung hintereinander liegen, und
- Figuren 2-4: Schemadarstellungen, anhand derer erfindungsgemäße Möglichkeiten zur Beeinflussung der Kupplungssteuerung in Abhängigkeit von der Motordrehzahl erläutert sind, wobei angenommene Drehzahlen von Motor- und Kupplungsscheibe über der Zeit abgetragen sind.

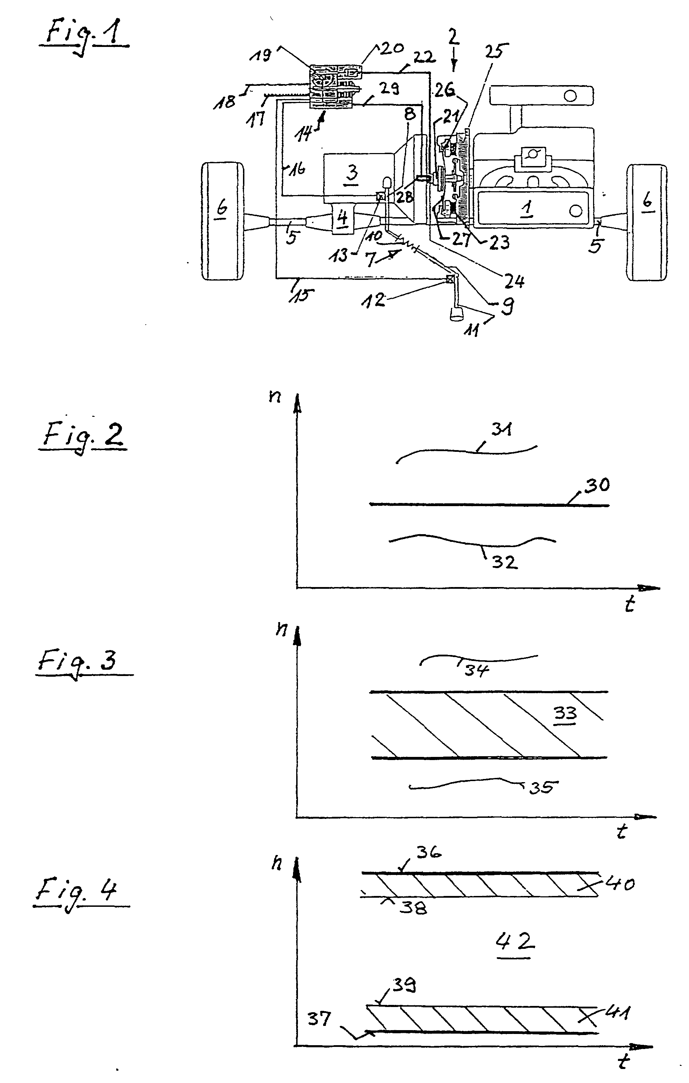

In Figur 1 ist schematisch der Triebstrang eines Kraftfahrzeuges, insbesondere eines Personenkraftwagen gezeigt, wobei der mit 1 bezeichnete Motor die Kupplung 2 und das über die Kupplung 2 mit dem Motor 1 verbundene Getriebe 3 quer zur Fahrtrichtung hintereinander liegen und wobei das Getriebe 3 über ein Ausgleichsgetriebe 4 und seitlich von diesem ausgehende Antriebswellen 5 die Räder 6 einer Achse antreibt. Sonstige Elemente des Fahrzeuges und insbesondere auch die Radaufhängungen sind nicht weiter dargestellt, da dies für das Verständnis der Erfindung nicht erforderlich ist.

Als Getriebe 3 ist ein handgeschaltetes Getriebe vorgesehen, dessen Betätigungsgestänge insgesamt mit 7 bezeichnet ist und im dargestellten, vereinfachten Ausführungsbeispiel getriebeseitig einen Stellhebel 8 aufweist, der gegenüber dem Getriebe 3 längsverschiebbar und verdrehbar geführt ist und über den die im Getriebe 3 für Schaltoperationen erforderlichen Stellbewegungen vorgenommen oder eingeleitet werden. Der Stellhebel 8 des Betätigungsgestänges 7 ist über ein Übertragungsgestänge 9 mit dem Schalthebel 11 verbunden, wobei im Betätigungsgestänge 7 vorhandene Elastizitäten durch eine Feder 10 symbolisiert sind. Der Schalthebel 11 kann in bekannter Weise im Hinblick auf die für Schaltoperationen notwendigen Stellbewegungen über eine Kulisse geführt sein, die hier nicht dargestellt ist und die entsprechend dem gewählten Schaltschema beispielsweise als sogenannte H-Kulisse ausgeführt ist, die im Regelfall für im Schaltvorgang aufeinanderfolgende Gänge eine erste Längsgasse aufweist, welche über eine Quergasse mit einer zweiten Längsgasse verbunden ist, wobei bevorzugt, von oben nach unten gesehen, der erste und der zweite Gang einander gegenüberliegend der ersten Längsgasse und der dritte und der vierte Gang der zweiten Längsgasse zugeordnet sind.

Die entsprechenden Stellbewegungen des Schalthebels 11 und des Stellhebels 8 werden, wie in Figur 1 angedeutet, über eine Sensorik erfaßt, die, dem Schalthebel 11 zugeordnet, wenigsten einen Sensor 12 zur Erkennung der Schaltabsicht und, dem Stellhebel 8 zugeordnet, wenigstens einen Sensor 13 zur Gangerkennung aufweist. Die Sensorik ist hier nicht näher dargestellt und kann kraft- wie auch wegabhängig arbeitende Linear-Sensoren, Drehwinkelsensoren oder andere Sensorelemente umfassen, deren Signale der nur schematisch angedeuteten Steuerung 14 für die automatische Betätigung der Kupplung 2 zugeleitet werden. Die Leitungen zwischen den Sensoren 12 bzw. 13 und der Steuerung 14 sind mit 15 und 16 bezeichnet, und weiter ist die Verbindung der Steuerung 14 mit weiteren Steuergeräten des Fahrzeuges, so beispielsweise mit dem hier nicht dargestellten Motorsteuergerät durch einen CAN-Bus 17 angedeutet. Ein weiterer Anschluß 18 des Steuergerätes 14 führt zum Bremslicht des Fahrzeuges und dient der Verknüpfung mit dem Bremssystem. Entsprechend wäre auch ein Anschluß an das Steuergerät des Bremssystemes möglich. Angedeutet ist, der Steuerung zugehörig, weiter ein Kupplungswegsensor 19 und ein über einen Stellmotor angesprochener Geberzylinder 20, der mit dem hydraulischen Zentralausrücker 21 der Kupplung 2 über eine Leitung 22 verbunden ist, wobei die Kupplung ansonsten in üblicher Weise ausgebildet ist und eine Kupplungsscheibe 23 aufweist, die auf der Eingangswelle 24 des Getriebes drehfest angeordnet ist und zwischen dem motorseitigen Schwungrad 25 und einer Druckplatte 26 liegt, welche über Federmittel 27 bei geschlossener Kupplung in Richtung auf das Schwungrad 25 belastet ist. Zum Lösen der Kupplung 2 über den Zentralausrücker 21 wird die Druckplatte 26 über die Federmittel 27 in Gegenrichtung bewegt, also vom Schwungrad 25 weg, so daß die Kupplungsscheibe 23, dem geöffneten Zustand der Kupplung 2 entsprechend, im wesentlichen frei zwischen Druckplatte 26 und Schwungrad 25 durchlaufen kann.

Aus den auf den Schalthebel 11 ausgeübten Kräften bzw. aus den mit dem Schalthebel 11 ausgeführten Bewegungen wird auf die Schaltabsicht rückgeschlossen - Sensorik zur Erkennung der Schaltabsicht, gebildet bevorzugt durch einen Drehwinkelsensor 12 - und zwar unter Berücksichtigung der jeweiligen Getriebestellung, die über die Gangerkennung - Sensorik zur Gangerkennung, gebildet durch je einen Hallsensor 13 für Schalt- und Wählrichtung - erfaßt wird.

Zur Erfassung der Drehzahl der Kupplungsscheibe 23 ist ferner ein Sensor 28 vorgesehen, der über eine Leitung 29 mit dem Steuergerät 14 verbunden ist. Anstelle einer solchen direkten Erfassung der Drehzahl der Kupplungsscheibe 23 ist es auch möglich, diese indirekt zu erfassen, so beispielsweise unter Berücksichtigung der Raddrehzahl und der eingelegten Gangstufe zu errechnen.

Fehlt das Drehzahlsignal für die Kupplungsscheibe 23, beispielsweise bei Ausfall des Sensors 28, Unterbrechung der durch die Leitung 29 symbolisierten Verbindung oder bei indirekter Erfassung durch Ausfall des Raddrehzahlgebers oder dergleichen, so kann das Ein- und Auskuppeln nur unkontrolliert erfolgen. Insbesondere kann aber zu Beginn des Einkuppelvorgangs nicht erkannt werden, ob die Drehzahl der Kupplungsscheibe 23 nach Beendigung des Einkuppelvorgangs eine Größenordnung aufweist, die für den Motor 1 und dessen Betrieb verträglich ist. Zum Beispiel kann bei einem kleinen eingelegten Gang schon bei relativ geringer Geschwindigkeit des Fahrzeuges eine so hohe Drehzahl der Kupplungsscheibe 23 gegeben sein, daß der Motor überdreht wird. Umgekehrt ist es aber bei einem großen Gang und verhältnismäßig kleiner Geschwindigkeit möglich, daß die Drehzahl der Kupplungsscheibe so klein ist, daß der Motor abgewürgt wird.

Ist keine Drehzahlerfassung der Kupplungsscheibe gegeben, so muß dementsprechend eine Hilfsgröße herangezogen werden, um Motorschäden auszuschließen.

Gemäß der Erfindung wird insoweit die Motordrehzahl genutzt, und über das Motordrehzahlsignal das Kupplungssteuergerät 14 entsprechend angesprochen, wobei die Verbindung über den CAN-Bus 17 läuft.

Bei Ausfall des Kupplungsscheibendrehzahlsignales wird nun während des Einkuppelns die Motordrehzahl auf Abweichungen von einer vorgegebenen Richtdrehzahl überwacht, und bei auftretenden Abweichungen wird die Kupplung weiter geöffnet, um zu verhindern, daß ausgehend von der Abtriebsseite, also von den Rädern der Motor 1 in Drehzahlbereiche gebracht wird, in denen er Schaden nehmen könnte, beispielsweise überdreht oder abgewürgt wird.

In Figur 2 ist eine besonders einfache Lösung veranschaulicht und es ist hier eine Motordrehzahllinie 30 angenommen, die im mittleren Drehzahlbereich des Motores 1 liegt und die als Richtdrehzahl dient. Weicht die über die Motordrehzahl erfaßte Kupplungsscheibendrehzahl wesentlich ab, zum Beispiel nach oben, wie durch die Motordrehzahllinie 31 angedeutet, oder nach unten, wie durch die Motordrehzahllinie 32 veranschaulicht, so wird über die Kupplungssteuerung eingegriffen und die Kupplung 2 weiter geöffnet, damit der Motor 1 nicht, wie dies bei geschlossener Kupplung 2 sich ergeben würde, von der Abtriebsseite her in Drehzahlbereiche geschleppt wird, die kritisch sind und im Extrem zu Motorschäden führen können.

Figur 3 zeigt eine weitere im Rahmen der Erfindung liegende Möglichkeit, und es ist hier ein Motordrehzahlband 33 vorgesehen, das die Grenzen dafür setzt, ob in Abhängigkeit von der Motordrehzahl mit Priorität in die Kupplungssteuerung eingegriffen wird. Durch weiteres Öffnen der Kupplung wird verhindert, daß bei außerhalb dieses Drehzahlbandes 33 liegenden Kupplungsscheibendrehzahlen, wie durch die Motordrehzahllinien 34 und 35 angedeutet, der Motor in kritische Bereiche geschleppt wird.

Figur 4 veranschaulicht eine Lösung, bei der Drehzahlgrenzwerte des Motores, die vorgegeben werden und die im Extremfall nahe der Höchstdrehzahl und der Leerlaufdrehzahl des Motores liegen, die Grenzen bilden, die bei geschlossener Kupplung und dementsprechend nahezu starrer Anbindung des Motores an den Abtrieb durch Antrieb von der Abtriebsseite her nicht überschritten werden dürfen. Werden die entsprechenden Grenzwerte erreicht, die hier durch die Motordrehzahllinien 36 und 37 symbolisiert sind, so wird die Kupplung 2 voll geöffnet; das die entsprechende Richtgröße bildende Motordrehzahlsignal ist dabei priorisiert, die sonstigen, die Steuerung der Kupplung beeinflußenden Größen müssen demgegenüber zurücktreten. Bei einer derartigen Lösung ist der Bereich, in dem die Motordrehzahl nicht priorisiert in das Steuersystem eingreift, besonders groß, und es kann deshalb auch die Motorbremsfunktion voll genutzt werden. Insbesondere zur Verbesserung des Komforts, und um harte Übergänge zu vermeiden, erweist es sich als zweckmäßig, den Motordrehzahllinien 36 und 37, die die äußeren Grenzwerte bilden, innere Begrenzungswerte zuzuordnen, die durch die Motordrehzahllinien 38 und 39 veranschaulicht sind, so daß sich zwei Drehzahlbänder 40 und 41 ergeben, zwischen denen ein großer Drehzahlbereich 42 des Motores liegt, in dem die Motordrehzahl auf die Steuerung des Einrückens der Kupplung keine Priorität hat. Im Bereich der Drehzahlbänder 40 und 41 kann motordrehzahlabhängig das Schlupfverhalten der Kupplung von außen - voll geöffnet-, nach innen - voll geschlossen - geändert werden, so daß sich fließende Übergänge ergeben.

## Patentansprüche

1. Verfahren zur Steuerung einer automatischen Kupplungsbetätigung eines Kraftfahrzeuges, bei dem das Einkuppeln in Abhängigkeit von Motor- und Kupplungsscheibendrehzahl gesteuert wird, wobei die Drehzahl der Kupplungsscheibe (23) direkt, oder indirekt durch Berechnung aus korrespondierenden Drehzahlen erfaßt wird, **dadurch gekennzeichnet, daß** bei Ausfall des Kupplungsscheibendrehzahlsignales eine Ersatzsteuergröße zur Steuerung der Kupplung (2) herangezogen wird,
daß als Ersatzsteuergröße die Drehzahl des - über die Kupplung (2) ausgehend von der Abtriebsseite geschleppten oder gebremsten - Motores (1) dient, die auf Überschreiten vorgegebener Drehzahlgrenzen überwacht wird, daß die vorgegebenen Drehzahlgrenzen mit Abstand zur Leerlauf- bzw. Höchstdrehzahl liegen und daß die Kupplung (2) bei Überschreiten der vorgegebenen Drehzahlgrenzen in Richtung auf die Leerlauf- bzw. Höchstdrehzahl geöffnet wird.

2. Verfahren nach Anspruch 1,
**dadurch gekennzeichnet,**
**daß** die Kupplung (2) mit zunehmender Annäherung an die Leerlauf- bzw. Höchstdrehzahl weiter geöffnet wird.

3. Verfahren nach Anspruch 1 oder 2,
**dadurch gekennzeichnet,**
**daß** die vorgegebene Motordrehzahlgrenze durch eine Motordrehzahllinie (30) gebildet ist.

4. Verfahren nach Anspruch 1 oder 2,
**dadurch gekennzeichnet,**
**daß** die vorgegebene Motordrehzahlgrenze durch ein Motordrehzahlband (33) gebildet ist.

5. Verfahren nach Anspruch 4,
**dadurch gekennzeichnet,**
**daß** das Motordrehzahlband (33) einen mittleren Motordrehzahlbereich abdeckt.

6. Verfahren nach Anspruch 1 oder 2,
**dadurch gekennzeichnet,**
**daß** die vorgegebene Motordrehzahlgrenze durch jeweils eine obere und eine untere Motordrehzahllinie (36, 37) gebildet ist.

7. Verfahren nach Anspruch 6,
**dadurch gekennzeichnet,**
**daß** der oberen Motordrehzahllinie (36) und der unteren Motordrehzahllinie (37), die jeweils äußere Grenzwerte bilden, jeweils eine innere Motordrehzahllinie (38 bzw. 39) als Begrenzungswert zugeordnet ist, derart, daß jeweils ein Drehzahlband (40 bzw. 41) gebildet ist und daß die Motordrehzahlregelung lediglich innerhalb dieses Drehzahlbandes (40 bzw. 41) Priorität in Bezug auf die Einkuppelphase hat.

8. Verfahren nach Anspruch 7,
**dadurch gekennzeichnet,**
**daß** die Kupplung voll geöffnet ist, wenn die als Ersatzsteuergröße dienende Motordrehzahl die äußeren Motordrehzahllinien (36 bzw. 37) der Drehzahlbänder (40 bzw. 41) überschreitet.

9. Verfahren nach Anspruch 7 oder 8,
**dadurch gekennzeichnet,**
**daß** die Kupplung voll geschlossen ist, wenn die als Ersatzsteuergröße dienende Motordrehzahl die inneren Motordrehzahllinien (36 bzw. 37) der Drehzahlbänder (40 bzw. 41) überschreitet.

## Claims

1. A process for controlling the automatic actuation of a clutch in a motor vehicle in which clutch engagement is controlled dependent on engine speed and clutch disk speed, the speed of the clutch disk (23) being measured directly or indirectly from corresponding speeds by calculation,
**characterised in that**
in the event of a failure of the clutch disk speed signal a substitute actuating variable is used to control the clutch (2), the speed of the engine (1) - dragged or braked via the clutch (2) starting from the power take-off side - is used as the substitute actuating variable and monitored to ensure that it is not exceeding predetermined speed limits, said predetermined speed limits are positioned a certain distance from idle/maximum speed, and when the predetermined speed limits are exceeded the clutch (2) is opened towards the idle/maximum speed.

2. A process in accordance with claim 1,
**characterised in that**
the clutch (2) is opened further as the idle/maximum speed is reached.

3. A process in accordance with claim 1 or 2,
**characterised in that**
the predetermined engine speed limit is formed by an engine speed line (30).

4. A process in accordance with claim 1 or 2,
**characterised in that**
the predetermined engine speed limit is formed by an engine speed band (33).

5. A process in accordance with claim 4,
**characterised in that**
the engine speed band (33) covers a middle engine speed range.

6. A process in accordance with claim 1 or 2,
**characterised in that**
the predetermined engine speed limit is formed by an upper and a lower engine speed line (36, 37).

7. A process in accordance with claim 6,
**characterised in that**
an inner engine speed line (38/39) is associated with the upper engine speed line (36) and the lower engine speed line (37), which each form outer limit values, as a limiting value in such manner that a speed band (40/41) is formed, and the engine speed control system has priority in relation to the clutch engagement phase within this speed band (40/41) only.

8. A process in accordance with claim 7,
**characterised in that**
the clutch is fully opened when the engine speed used as the substitute actuating variable exceeds the outer engine speed lines (36/37) of the speed bands (40/41).

9. A process in accordance with claim 7 or 8,
**characterised in that**
the clutch is fully closed when the engine speed used as the substitute actuating variable exceeds the inner engine speed lines (36/37) ofthe speed bands (40/41).

## Revendications

1. Procédé de commande d'un actionnement d'embrayage automatique d'un véhicule automobile, dans lequel l'opération d'embrayage est commandée en fonction des vitesses de rotation du moteur et du disque d'embrayage, la vitesse de rotation du disque d'embrayage (23) étant détectée par voie directe ou par voie indirecte par calcul à partir des vitesses de rotation correspondantes, **caractérisé en ce qu'**en cas de défaillance du signal de vitesse de rotation du disque d'embrayage, on a recours à une grandeur de commande subsidiaire pour commander l'embrayage (2), **en ce qu'**à titre de grandeur de commande subsidiaire on utilise la vitesse de rotation du moteur (1) traîné ou freiné via l'embrayage (2) à partir du côté mené, vitesse qui est surveillée à l'égard d'un dépassement de vitesses de rotation limites prédéterminées, **en ce que** les vitesses de rotation limites prédéterminées sont écartées de la vitesse de rotation au ralenti ou de la vitesse de rotation maximale et **en ce que** l'embrayage (2) est ouvert lors d'un dépassement des vitesses de rotation limites prédéterminées dans le sens de la vitesse de rotation au ralenti ou de la vitesse de rotation maximale.

2. Procédé selon la revendication 1, **caractérisé en ce que** l'on continue à ouvrir l'embrayage au fur et à mesure du rapprochement vers la vitesse de rotation au ralenti ou vers la vitesse de rotation maximale.

3. Procédé selon l'une ou l'autre des revendications 1 et 2, **caractérisé en ce que** la vitesse de rotation limite prédéterminée du moteur est formée par une ligne de vitesse de rotation (30) du moteur.

4. Procédé selon l'une ou l'autre des revendications 1 et 2, **caractérisé en ce que** la vitesse de rotation limite prédéterminée du moteur est formée par une bande de vitesse de rotation (33) du moteur.

5. Procédé selon la revendication 4, **caractérisé en ce que** la bande de vitesse de rotation (33) du moteur recouvre une plage médiane de la vitesse de rotation du moteur.

6. Procédé selon l'une ou l'autre des revendications 1 et 2, **caractérisé en ce que** la vitesse de rotation limite prédéterminée du moteur est formée respectivement par une ligne supérieure et par une ligne inférieure de vitesse de rotation (36, 37) du moteur.

7. Procédé selon la revendication 6, **caractérisé en ce que** l'on associe à la ligne supérieure de vitesse de rotation (36) du moteur et à la ligne inférieure de vitesse de rotation (37) du moteur, chaque ligne formant une valeur limite extérieure, une ligne intérieure respective de vitesse de rotation (38 ou 39) du moteur à titre de valeur de limitation, de telle sorte que l'on forme une bande de vitesse de rotation respective (40 ou 41), et **en ce que** la régulation de la vitesse de rotation du moteur est prioritaire par rapport à la phase d'embrayage uniquement à l'intérieur de cette bande de vitesse de rotation (40 ou 41).

8. Procédé selon la revendication 7, **caractérisé en ce que** l'embrayage est complètement ouvert lorsque la vitesse de rotation de moteur servant de grandeur de commande subsidiaire dépasse les lignes de vitesse de rotation extérieures (36 ou 37) du moteur des bandes de vitesse de rotation (40 ou 41).

9. Procédé selon l'une ou l'autre des revendications 7 et 8, **caractérisé en ce que** l'embrayage est complètement fermé lorsque la vitesse de rotation de moteur servant de grandeur de commande subsidiaire dépasse les lignes de vitesses de rotation intérieures (36 ou 37) du moteur des bandes de vitesse de rotation (40 ou 41).
